(19) Europäisches Patentamt
European Patent Office
Office européen des brevets

(11) Veröffentlichungsnummer: **0 482 391 B1**

# (12) EUROPÄISCHE PATENTSCHRIFT

(45) Veröffentlichungstag der Patentschrift: **06.12.95**

(51) Int. Cl.$^6$: **C08C 2/04**, C22B 3/00, B01J 20/22

(21) Anmeldenummer: **91116808.6**

(22) Anmeldetag: **02.10.91**

## (54) Rückgewinnung von Hydrierkatalysatoren aus Lösungen von hydriertem Nitrilkautschuk.

(30) Priorität: **13.10.90 DE 4032597**

(43) Veröffentlichungstag der Anmeldung:
**29.04.92 Patentblatt 92/18**

(45) Bekanntmachung des Hinweises auf die Patenterteilung:
**06.12.95 Patentblatt 95/49**

(84) Benannte Vertragsstaaten:
**DE FR GB IT**

(56) Entgegenhaltungen:
**EP-A- 0 367 104**
**EP-A- 0 429 017**
**EP-A- 0 429 017**
**DE-A- 3 837 418**
**US-A- 4 851 492**

(73) Patentinhaber: **BAYER AG**
**D-51368 Leverkusen (DE)**

(72) Erfinder: **Panster, Peter, Dr.**
**Im Lochseif 8**
**W-6458 Rodenbach (DE)**
Erfinder: **Wieland, Stefan, Dr.**
**Liebig Strasse 9**
**W-6050 Offenbach (DE)**
Erfinder: **Buding, Hartmuth, Dr.**
**Liebermannstrasse 1**
**W-4047 Dormagen (DE)**
Erfinder: **Obrecht, Werner, Dr.**
**Holderbergerstrasse 108**
**W-4130 Moers 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft die Rückgewinnung von Verbindungen des Rhodiums und Rutheniums, die für die homogene Katalyse der Hydrierung von Nitrilkautschuk (nachfolgend: "NBR") eingesetzt worden sind, aus der Lösung des hydrierten Nitrilkautschuks (nachfolgend: "HNBR") durch Absorption an bestimmten Organosiloxan-Copolykondensaten.

HNBR wird durch selektive Hydrierung von NBR mit Wasserstoff unter heterogener oder homogener Katalyse in organischem Lösungsmittel hergestellt.

Über die Rückgewinnung von homogenen Hydrierkatalysatoren aus HNBR-Lösungen ist wenig bekannt. Im Gegensatz zu heterogenen Hydrierkatalysatoren können homogene Hydrierkatalysatoren nicht durch einfache Filtration oder Zentrifugation abgetrennt werden.

Die unbestrittenen Vorteile von homogenen Hydrierkatalysatoren liegen jedoch in ihrer Leistungsfähigkeit, was ihre Einsatzmenge anlangt, und in ihrer leicht erzielbaren Qualitätskonstanz.

Zur Entfernung eines gelösten Rhodiumkomplex-Katalysators aus der Reaktionslösung einer NBR-Hydrierung beschreibt die US-PS 3 700 637 die Ausfällung des Kautschuks aus der Chlorbenzol/m-Kresol-Lösung mit Methanol und anschließender sukzessiver Wäsche des koagulierten Kautschuks mit Methanol, bis das Methanol nicht mehr gefärbt wird. Aus dem gesammelten Methanol kann dann der Edelmetallkomplex erhalten werden. Dies ist sehr umständlich und im Tonnen-Produktionsmaßstab schwer durchführbar, da der gelöste Kautschuk beim Kontakt mit Methanol zu großen, klebrigen, zähen Klumpen koaguliert, die sich nicht mehr ohne weiteres für eine optimale Methanol-Wäsche zerkleinern lassen. Zum anderen müssen beträchtliche Lösungsmittelmengen gehandhabt werden.

Die EP-A 354 413 offenbart eine Methode zur Abtrennung von löslichen Rh-Katalysatoren aus HNBR-Lösungen mit überschüssigen fein verteilten organischen Zusätzen, die HNBR nachteilig verunreinigen können, sofern sie nicht wieder sorgfältig abgetrennt werden.

Unter NBR im Sinne der Erfindung sind Copolymerisate aus

a) 85 bis 50 Gew.-%, bevorzugt 82 bis 52 Gew.-%, konjugiertem Dien,

b) 15 bis 50 Gew.-%, vorzugsweise 18 bis 48 Gew.-%, ungesättigtem Nitril und

c) 0 bis 10 Gew.-%, bevorzugt 0 bis 8 Gew.-%, einem oder mehreren weiteren, mit konjugierten Dienen (a) und ungesättigten Nitrilen (b) copolymerisierbaren Monomeren zu verstehen.

Als konjugierte Diene (a) kommen z.B. Butadien-1,3, 2-Methylbutadien-1,3, 2,3-Dimethylbutadien-1,3 und Pentadien-1,3, als ungesättigte Nitrile (b) Acrylnitril und Methacrylnitril in Frage.

Als weitere Monomere (c) kommen Vinylaromaten wie Styrol, o-, m- oder p-Methylstyrol, Ethylstyrol, Vinylnaphthalin und Vinylpyridin, $\alpha,\beta$-ungesättigte Monocarbonsäuren mit 3 bis 5 C-Atomen wie Acrylsäure, Methacrylsäure und Crotonsäure sowie $\alpha,\beta$-ungesättigte Dicarbonsäuren mit 4 bis 5 C-Atomen wie Malein-, Fumar-, Citracon- und Itaconsäure, ferner Vinylchlorid, Vinylidenchlorid, N-Methylolacrylamid und Vinylalkylether mit 1 bis 4 C-Atomen im Alkylteil in Betracht.

Bevorzugte Nitrilkautschuke besitzen Glasübergangstemperaturen unter 0 °C, in der Regel Mooney-Viskositäten (DIN 53 523) von 10 bis 150,
vorzugsweise von 15 bis 100 (ML 1 + 4) 100 °C und als Gewichtsmittel bestimmte mittlere Molekulargewichte $\overline{M}_w$ von 500 bis 500.000, vorzugsweise 5.000 bis 400.000, insbesondere 10.000 bis 350.000 und speziell von 15.000 bis 300.000. Die Molekulargewichte $\overline{M}_w$ können durch Gelpermeationschromatographie mit Polystyrol als Standard bestimmt werden.

Bevorzugte hydrierte Nitrilkautschuke besitzen Hydriergrade (Prozentsatz der hydrierten C=C-Doppelbindungen, bezogen auf die Zahl der ursprünglich vorhandenen C=C-Doppelbindungen) von wenigstens 80%, vorzugsweise von wenigstens 90%, insbesondere von wenigstens 95% und ganz besonders bevorzugt von wenigstens 99%.

Der Hydriergrad kann IR- oder NMR-spektroskopisch bestimmt werden.

Unter "selektiver Hydrierung" wird im Sinne der Erfindung die Hydrierung der olefinischen C=C-Doppelbindungen unter Erhalt der C≡N-Dreifachbindungen verstanden. "Unter Erhalt der C≡N-Dreifachbindungen" bedeutet in diesem Zusammenhang, daß weniger als 7, vorzugsweise weniger als 5, insbesondere weniger als 3 und speziell weniger als 1,5 % der ursprünglich vorhandenen Nitrilgruppen des NBR hydriert werden. Die Hydrierung läßt sich IR- und NMR-spektroskopisch kontrollieren.

Unter homogener Katalyse versteht man - im Gegensatz zur heterogenen Katalyse - daß das für die Hydrierung vorgesehene Ausgangsprodukt und der Katalysator (im vorliegenden Fall: in einem organischen Lösungsmittel) homogen gelöst vorliegen.

Zur Hydrierung von olefinisch ungesättigten Polymerisaten mit Wasserstoff unter homogener Katalyse werden als Katalysatoren vor allem Rhodium-und Rutheniumverbindungen empfohlen; vergl. z.B. DE-PS 25 39 132, DE-OS 33 37 294, 34 33 392, 35 29 252, 35 40 918 und 35 41 689, EP-A 134 023 und 298 386

sowie US-PS 3 700 637, 4 464 515, 4 503 196 und 4 795 788. Die Katalysatoren werden im allgemeinen in Mengen (berechnet als Metall) von 2 bis 1.000, vorzugsweise 5 bis 300 ppm, insbesondere von 8 bis 200 ppm, bezogen auf zu hydrierendes Ausgangsprodukt, eingesetzt. Bei der Aufarbeitung des Hydrierungsprodukts verbleiben sie meist im Produkt und sind so für eine Wiederverwendung verloren. Dies stellt bei der Kalkulation einen wichtigen Kostenfaktor dar. Außerdem verschlechtern größere im Produkt verbleibende Katalysatormengen die technologischen Eigenschaften.

Aufgabe der Erfindung war es daher, die Katalysatoren für die homogene Katalyse nach erfolgter NBR-Hydrierung mit vertretbarem Aufwand abzutrennen, so daß diese wertvollen Katalysatoren wiederverwendet werden können und man zu guten Produkten kommt.

Überraschenderweise wurde gefunden, daß sich das geschilderte Problem durch Absorption der Katalysatoren an bestimmten Organosiloxan-Copolykondensaten lösen läßt.

Gegenstand der Erfindung ist also die Verwendung von Absorbern zur Rückgewinnung von Verbindungen des Rhodiums und/oder Rutheniums, die für die homogene Katalyse der NBR-Hydrierung mit Wasserstoff in organischer Lösung gebraucht worden sind, aus der HNBR-Lösung, wobei als Absorber Organosiloxan-Copolykondensate, bestehend aus Einheiten der Formel

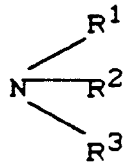 (I)

und aus Einheiten der Formel

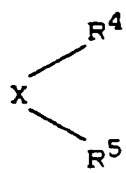 (II)

eingesetzt werden, wobei

$R^1$ bis $R^5$ gleich oder verschieden sind und eine Gruppe der Formel

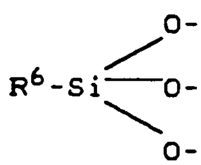 (III)

bedeuten,

$R^6$ direkt an das Stickstoffatom bzw. den zweibindigen Rest X gebunden ist und eine lineare oder verzweigte Alkylengruppe mit 1 bis 10 C-Atomen, eine Cycloalkylengruppe mit 5 bis 8 C-Atomen oder eine Einheit der Formel

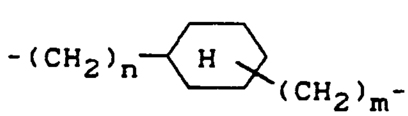 oder 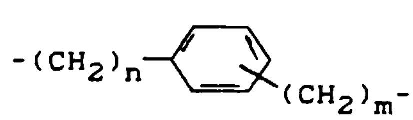

darstellt, in der

n eine Zahl von 1 bis 6 ist und die Zahl stickstoffständiger bzw. X-ständiger Methylengruppen angibt und

m eine Zahl von 0 bis 6 ist,

die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren der vernetzenden Brückenglieder

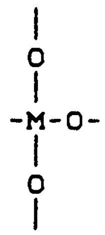 oder 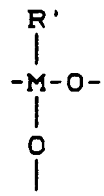 oder 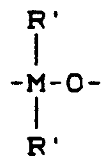 (IV)

bzw.

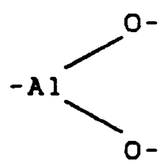 oder 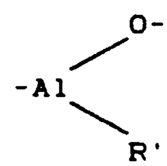

abgesättigt sind,

M ein Silicium-, Titan- oder Zirkoniumatom und

R' eine lineare oder verzweigte Alkylgruppe mit 1 bis 5 C-Atomen oder eine Phenylgruppe ist und das Verhältnis der Siliciumatome aus den Gruppen der Formel (III) zu den Metallatomen in den Brückengliedern (IV) 1 : 0 bis 1 : 20 beträgt und in Formel (II)

X für >N-H, >$N-CH_3$, >$N-C_2H_5$, -S-, -$S_2$-, -$S_3$-, -$S_4$-,

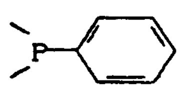 , 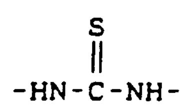 ,

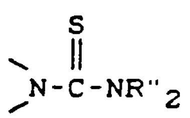 , 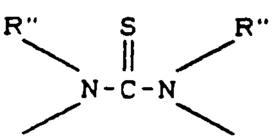 , 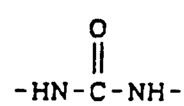

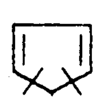 , 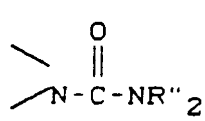

steht, wobei

R'' gleich H oder eine lineare oder verzweigte Alkylgruppe mit 1 bis 5 C-Atomen oder eine Gruppe $(CH_2)_n-NR'''_2$ ist,

n eine Zahl von 1 bis 6 bedeutet und

R''' gleich H oder eine lineare oder verzweigte Alkylgruppe mit 1 bis 5 C-Atomen ist.

Nach einer besonders bevorzugten Ausführungsform werden die Organosiloxan-Copolykondenste als makroskopisch kugelförmige Teilchen mit einem Durchmesser von 0,01 bis 3,0, vorzugsweise 0,05 bis 2,0 mm, einer spezifischen Oberfläche von 0,0001 bis 1.000, vorzugsweise 0,001 bis 700 $m^2/g$, einem spezifischen Porenvolumen von 0,01 bis 6,0 ml/g sowie einer Schüttdichte von 50 bis 1.000 g/l, vorzugsweise 100 bis 800 g/l, verwendet.

Die erfindungsgemäß als Absorber zu verwendenden Copolykondensate sind aus der DE-OS 38 37 418 bekannt.

Das Verhältnis der Einheiten nach Formel (I) zu Einheiten nach Formel (II) kann (0,03:99,97) bis (99,99:0,01), vorzugsweise (5:95) bis (95:5) Mol-%, betragen, ohne daß Probleme mit den morphologischen, physikalischen oder chemischen Eigenschaften der erfindungsgemäß zu verwendenden Produkte oder bei deren Herstellung auftreten.

Das in der Praxis zu wählende Verhältnis hängt in erster Linie von den erforderlichen chemischen und physikalischen Eigenschaften ab, also z.B. davon, ob eine hohe Dichte an funktionellen Gruppen nach Formel (II) gewünscht wird oder nicht.

Die monomeren Bausteine der erfindungsgemäß zu verwendenden Organosiloxanamin-Copolykondensate sind prinzipiell bekannte Verbindungen, beispielsweise der Formeln

$N[(CH_2)_3Si(OC_2H_5)_3]_3$,
$S[(CH_2)_3Si(OCH_3)_3]_2$,
$HN[(CH_2)_{10}Si(OC_2H_5)_3]_2$,
$C_6H_5\text{-}P[(CH_2)_2Si(OCH_3)_3]_2$,
$S_4[CH_2\text{-}C_6H_4\text{-}Si(OC_3H_7)_3]_2$,
$Si(OC_2H_5)_4$, $Ti(OC_3H_7)_4$.

(N,N'-Disubstituierte und N,N,N'-/N,N',N'-trisubstituierte organyloxysilyl-funktionelle Thioharnstoffe, die zusätzlich eine tertiäre Aminfunktion aufweisen, sind in der deutschen Patentanmeldung P 39 25 356.2 vom 31.7.1989 bezüglich Stoff und Herstellungsmöglichkeiten beschrieben.)

Die Zusammensetzung der daraus erhältlichen Polymereinheiten läßt sich durch die Formeln

$N[(CH_2)_3SiO_{3/2}]_3$,
$S[(CH_2)_3SiO_{3/2}]_2$,
$HN[(CH_2)_{10}SiO_{3/2}]_2$,
$C_6H_5\text{-}P[(CH_2)_{10}SiO_{3/2}]_2$,
$S_4[CH_2\text{-}C_6H_4\text{-}SiO_{3/2}]_2$,
$SiO_{4/2}$ und $TiO_{4/2}$

beschreiben,

Die erfindungsgemäß zu verwendenden Copolykondensate können selbst bei gleicher chemischer Zusammensetzung in völlig unterschiedlicher Form als statistische Copolykondensate, als Block-Copolykondensate oder auch als sog. gemischte Copolykondensate vorliegen. Die Copolykondensate können in Bezug auf die Einheiten nach Formeln (I), (II) und (IV) in jeder der drei genannten Formen vorliegen. Dies bedeutet, daß im Falle eines rein statistischen Copolykondensates, das Einheiten nach Formel (I) und (II) und gegebenenfalls auch Einheiten nach Formel (IV) enthält, eine statistische Verteilung der Komponenten entsprechend der molaren Verhältnisse der Ausgangsprodukte unter Berücksichtigung der im Fall der Einheiten (I) und (II) jeweils vorhandenen Siliciumgruppierungen nach Formel (III) und der Funktionalität der Vernetzergruppierung (IV) gegeben ist. Im Falle eines Block-Copolykondensates liegt eine Bildung von Blöcken gleicher Einheiten nach Formel (I) und (II) und gegebenenfalls (IV) vor. Schließlich weist ein sog. gemischtes Copolykondensat sowohl Strukturen eines statistischen Copolykondensates als auch eines Block-Copolykondensates auf. Dabei können die Einheiten nach Formel (I) oder Formel (II) oder Formel (IV) sowohl als statistisches als auch als Block-Copolykondensat vorliegen.

Besondere Vorteile bezüglich der Verfügbarkeit der Ausgangsmaterialien und der stofflichen Eigenschaften werden mit Cokondensaten erreicht, in denen

$R^1$ bis $R^5$ für eine Gruppe der Formel

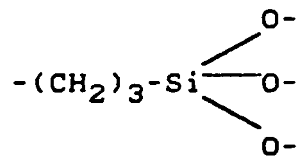

stehen.

Prinzipiell können als Ausgangsstoffe für das Verfahren zur Herstellung der erfindungsgemäß zu verwendenden Copolykondensate anstelle der Alkoxysilylaminverbindungen auch die entsprechenden Halogenid- oder Phenoxyverbindungen eingesetzt werden, doch bietet deren Verwendung keine Vorteile, sondern kann z.B. im Fall der Chloride Schwierigkeiten durch die bei der Hydrolyse freiwerdende Salzsäure verursachen.

Nach einer besonders bevorzugten Ausführungsform der Erfindung werden die Copolykondensate in Kugelform eingesetzt. Sie lassen sich beispielsweise so herstellen, daß man ein tertiäres Aminoorganosilan der Formel

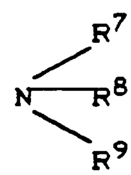 (V)

zusammen mit einem organofunktionellen Silan

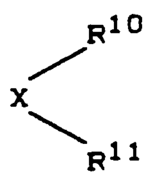 (VI)

entsprechend der gewünschten stöchiometrischen Zusammensetzung des herzustellenden Copolykondensates, wobei

$R^7$ bis $R^{11}$ gleich oder verschieden sind und eine Gruppe der Formel

$R^6$-Si(OR$^{12}$)$_3$ (VII)

bedeuten,

$R^6$ dieselbe Bedeutung wie in Formel (III) hat,

$R^{12}$ eine lineare oder verzweigte Alkylgruppe mit 1 bis 5 C-Atomen bedeutet und

X dieselbe Bedeutung wie in Formel (II) hat,

gegebenenfalls nach Zusatz eines oder mehrerer Vernetzer der Formel

M(OR)$_{2-4}$ R'$_{0-2}$ bzw. M(OR)$_{2-3}$ R'$_{0-1}$ (VIII)

wobei

M ein Silicium-, Titan-, Zirkon- oder Aluminiumatom,

R' eine lineare oder verzweigte Alkylgruppe mit 1 bis 5 C-Atomen oder eine Phenylgruppe ist und

R eine lineare oder verzweigte Alkylgruppe mit 1 bis 5 C-Atomen bedeutet und das Verhältnis der Siliciumatome aus den Gruppen der allgemeinen Formel (VII) zu den Metallatomen in den Vernetzern (VIII) 1:0 bis 1:20 beträgt,

in einem weitgehend wassermischbaren, aber Aminoorganosilan nach Formel (V) und organofunktionelles Silan nach Formel (VI) sowie Vernetzer nach Formel (VIII) lösenden Lösungsmittel auflöst und der Lösung

unter Rühren eine zumindest für die vollständige Hydrolyse und Kondensation ausreichenden Menge Wasser zufügt, dann das Reaktionsgemisch unter Weiterrühren bei einer bestimmten Temperatur im Bereich von Raumtemperatur bis 200 °C unter der Maßgabe gelieren läßt, daß es bei Gelierungsbeginn oder bis zu einer Stunde danach mit 10 bis 2.000, vorzugsweise 50 bis 500 Gew.-%, bezogen auf die Gesamtmenge von Aminoorganosilan (V), organofunktionellem Silan (VI) und gegebenenfalls Vernetzer (VIII), eines weitgehend wasserunlöslichen, aber die (an)gelierte Reaktionsmischung lösenden Lösungsmittels versetzt und homogenisiert wird, dem viskosen Homogenisat sofort oder im Zeitraum bis zu 3 Stunden, gegebenenfalls unter Erhöhung der ursprünglich eingestellten Temperatur, 10 bis 2.000, vorzugsweise 50 bis 500 Gew.-%, bezogen auf die Gesamtmenge von Aminoorganosilan (V), organofunktionellem Silan (VI) und gegebenenfalls Vernetzer (VIII), Wasser zugibt, die jetzt Siloxan-enthaltende organische Phase in dem flüssigen Zweiphasensystem dispergiert und den sich in Form von Kugeln bildenden Feststoff nach dafür ausreichender Reaktionszeit bei Raumtemperatur bis 200 °C von der flüssigen Phase abtrennt und dann gegebenenfalls extrahiert, bei Raumtemperatur bis 250 °C, gegebenenfalls unter Schutzgas oder im Vakuum trocknet und 1 bis 100 Stunden bei Temperaturen von 150 °C bis 300 °C tempert.

Die Hydrolyse von Ausgangsstoff und gegebenenfalls Vernetzer muß in einem weitgehend wassermischbaren, aber die Ausgangsstoffe lösenden Lösungsmittel durchgeführt werden, Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet ist Methanol, Ethanol, n- und i-Propanol, n- und i-Butanol oder n-Pentanol. Auch Gemische solcher Alkohole können als Lösungsmittel bei der Hydrolyse angewandt werden. Anstelle von Alkoholen können auch andere polare Lösungsmittel, die weitgehend wassermischbar sind, eingesetzt werden, doch erweist sich dies aus verfahrenstechnischen Gründen wegen der mit dem hydrolytisch abgespaltenen Alkohol zustandekommenden Lösungsmittelgemische als wenig sinnvoll.

Bevorzugt führt man die Hydrolyse mit einem Überschuß an Wasser über die stöchiometrisch erforderliche Menge durch. Die zur Hydrolyse benötigte Menge Wasser hängt von der Hydrolysegeschwindigkeit des jeweils verwendeten Aminoorganosilans bzw. Vernetzers derart ab, daß mit zunehmender Menge Wasser raschere Hydrolyse erfolgt; allerdings kann eine Obergrenze durch auftretende Entmischung und Ausbildung eines Zweiphasensystems vorgegeben sein, Grundsätzlich ist eine Hydrolyse in homogener Lösung vorzuziehen. Aufgrund der genannten beiden Aspekte wird in praxi gewichtsmäßig etwas weniger Wasser verwendet als Organosilane zuzüglich Vernetzer.

Die Dauer der Hydrolyse hängt von der Hydrolyseneigung von Ausgangsstoff und/oder Vernetzer und von der Temperatur ab. Die Hydrolysebereitschaft und damit -geschwindigkeit hängt insbesondere von der Art der Silicium- bzw. Titan-, Zirkonium-, Aluminium-ständigen Alkoxygruppen ab, wobei die Methoxygruppe am schnellsten hydrolysiert und mit steigender Kettenlänge des Kohlenwasserstoffrests eine Verlangsamung eintritt. Daneben hängt die Dauer des Gesamtvorganges Hydrolyse und Polykondensation auch von der Basizität des Aminoorganosilans ab. Amine fungieren bekanntlich als Kondensationsbeschleuniger, indem sie eine Autokatalyse bewirken. Hydrolyse und Polykondensation können daher durch Zusatz von Basen, vorzugsweise von Ammoniak, oder von anorganischen oder organischen Säuren, aber auch von üblichen Kondensationskatalysatoren, wie Dibutylzinndiacetat, beschleunigt werden.

Das Erfordernis, den in Lösungsmittel gelösten und mit Wasser vernetzten Ausgangsstoff unter Weiterrühren auf einer bestimmten Temperatur zu halten, resultiert daher, daß die Geschwindigkeit der sich durch Gelierung anzeigenden Polykondensation temperaturabhängig ist.

Die in der Hydrolyse- bzw. Gelierphase anzuwendende Temperatur wird im Einzelfall empirisch festgelegt. Es wird dabei darauf geachtet, daß für den darauffolgenden nächsten Verfahrensschritt die sog. Formungsphase, eine Feststoff-freie, flüssigkeitsdurchsetzte geleeartige Masse erhalten bleibt.

Die mit der Überführung der kohärenten flüssigkeitsdurchsetzten gelartigen Masse (in der die Kondensationsreaktion weiter fortschreitet) in separate sphärische Teilchen einhergehende Formungsphase beginnt mit dem Versetzen der (an)gelierten Reaktionsmischung mit einem weitgehend wasserunlöslichen, aber die Reaktionsmischung ausreichend lösenden Lösungsmittel in der vorgesehenen Menge.

Geeignete Lösungsmittel sind z.B. lineare oder verzweigte Alkohole mit 4 bis 18 C-Atomen oder Phenole, lineare oder verzweigte symmetrische oder unsymmetrische Dialkylether sowie Di- oder Triether (wie Ethylenglycoldimethylether), chlorierte oder fluorierte Kohlenwasserstoffe, mit einer oder mehreren Alkylgruppen substituierte Aromaten oder Aromatengemische, wie z.B. Toluol oder Xylol, weitgehend mit Wasser nicht mischbare symmetrische und unsymmetrische Ketone.

Bevorzugt wird der (an)gelierten Reaktionsmischung jedoch ein linearer oder verzweigter Alkohol mit 4 bis 12 C-Atomen, Toluol oder o-, m-, p-Xylol, einzeln oder im Gemisch, zugesetzt.

Dieser Lösungsmittelzusatz bewirkt nach der Homogenisierung mit der Reaktionsmischung eine Verdünnung und damit eine deutliche Verlangsamung der mit Viskositätszunahme einhergehenden Kondensationsreaktion.

Die Bemessung der Menge dieses in der Formungsphase verwendeten Lösungsmittels hängt insbesondere davon ab, welche Korngröße jeweils für die geformte Organosiloxanaminverbindung angestrebt wird. Als Faustregel kann gelten, daß für grobes Korn (= Kugeln von größerem Durchmesser) wenig, für feines Korn (Kugeln von kleinerem Durchmesser) viel Lösungsmittel zu verwenden ist.

Einfluß auf die Korngröße nimmt darüber hinaus auch die Intensität, mit der das viskose Homogenisat aus Reaktionsmischung und weitgehend wasserunlöslichem Lösungsmittel in dem in der Formungsphase als Dispersionsmittel zugesetzten weiteren Wasser dispergiert wird. Durch starkes Rühren wird regelmäßig die Ausbildung eines feineren Korns begünstigt. Zur Stabilisierung der wäßrigen Dispersion der (jetzt Siloxan enthaltenden) organischen Phase kann eines der bekannten Dispergierhilfsmittel, wie langkettige Carbonsäuren oder deren Salze oder Polyalkylenglykole in üblichen Konzentrationen verwendet werden.

Nach einer Variante des Herstellungsverfahrens wird ein Teil oder auch die Gesamtmenge des bei oder nach Gelierungsbeginn zuzusetzenden, weitgehend wasserunlöslichen Lösungsmittels schon in der Hydrolysestufe neben dem dort verwendeten Lösungsmittel eingesetzt. Bei Teilzugabe wird der Rest nach Gelierungsbeginn zugesetzt.

Im Extremfall der Zugabe der Gesamtmenge kann das Dispersionsmittel Wasser bei oder nach Gelierungsbeginn zugesetzt werden. Diese Variante wird dann bevorzugt angewendet, wenn das eingesetzte Organosilan- und gegebenenfalls Vernetzergemisch außerordentlich hohe Hydrolyse- und Polykondensationsneigung zeigt.

Die bevorzugte Temperatur, bei der die Dispergierung der Siloxan-enthaltenden organischen Phase in der wäßrigen Phase durchgeführt und aus der dispersen Phase kugelförmiger Feststoff gebildet wird, ist in der Regel die Rückflußtemperatur der Gesamtmischung. Grundsätzlich können aber dieselben Temperaturen wie in der Gelierstufe angewandt werden. Die Gesamtdauer von Dispergierungsstufe und Nachreaktion beträgt in der Regel 0,5 bis 10 Stunden.

Sowohl die Gelierung als auch die Formung können bei Normaldruck oder einem Überdruck, welcher der Summe der Partialdrucke der Komponenten der Reaktionsmischung bei der jeweils angewandten Temperatur entspricht, durchgeführt werden.

Bei der Herstellung der erfindungsgemäß zu verwendenden vernetzten oder unvernetzten Organosiloxanamine kann, was auch abhängig von der Art der Alkoxygruppen ist, der Fall eintreten, daß eine oder mehrere Komponenten der zu gelierenden Mischung ein unterschiedliches Hydrolyse- und Polykondensationsverhalten besitzt. In diesem Fall sieht eine Ausgestaltung des Herstellungsverfahrens vor, den oder die Vernetzer (VIII) und/oder das organofunktionelle Silan (VI) nicht gemeinsam mit dem Aminoorganosilan (V) der Gelierung zu unterwerfen, sondern das Aminoorganosilan gegebenenfalls zusammen mit dem Vernetzer (VIII) oder dem Organosilan (VI) zunächst separat zu gelieren, mit dem weitgehend wasserunlöslichen Lösungsmittel zu homogenisieren und erst dann den oder die Vernetzer oder das Organosilan dem Homogenisat zuzusetzen.

Es können aber auch dem gelierten Aminoorganosilan und gegebenenfalls Vernetzer oder Organosilan gleichzeitig das Lösungsmittel und die noch fehlende Silankomponente zugegeben werden.

Die Abtrennung des kugelig geformten feuchten Produktes von dem flüssigen Dispersionsmittel kann durch übliche Maßnahmen, wie Dekantieren, Abfiltrieren oder Zentrifugieren erfolgen.

Man kann dazu aber auch die flüssige Phase aus dem Reaktor entfernen, den verbleibenden Feststoff darin ein- oder mehrmals mit einem niedrig siedenden Extraktionsmittel, bevorzugt einem niedrig siedenden Alkohol, behandeln, um durch zumindest teilweisen Austausch des meist relativ hoch siedenden Lösungsmittels der Formungsphase gegen das niedrig siedende Extraktionsmittel die spätere Trocknung des geformten Materials zu erleichtern.

Die Trocknung kann grundsätzlich bei Raumtemperatur bis 250 °C, gegebenenfalls unter Schutzgas oder im Vakuum, durchgeführt werden, Zur Härtung und Stabilisierung kann der getrocknete geformte Feststoff bei Temperaturen von 150 bis 300 °C getempert werden.

Das getrocknete bzw. getemperte Produkt kann in üblichen Vorrichtungen in verschiedene Korngrößenfraktionen klassifiziert werden. Von den Aufarbeitungsmaßnahmen Extraktion, Trocknung, Temperung und Klassifizierung kann, je nach den Umständen, die eine oder andere entfallen. Eine Klassifikation kann an flüssigkeitsfeuchtem, getrocknetem oder getempertem Produkt durchgeführt werden.

Um ein unterschiedliches Hydrolyse- und Polykondensationsverhalten der monomeren Komponenten eines statistischen, gegebenenfalls vernetzten Copolykondensates auszugleichen, können die monomeren Komponenten nach Formel (V) und (VI) und der oder die gegebenenfalls vorhandenen Vernetzer nach Formel (VIII) zunächst vorkondensiert werden. Hierzu wird das Aminosilan nach Formel (V), die Monomerkomponente nach Formel (VI) und der oder die Vernetzer nach Formel (VIII) ohne oder unter Verwendung eines die Monomerkomponenten lösenden Lösungsmittels, bevorzugt unter Verwendung eines zu den

Alkoxygruppen korrespondierenden Alkohols mit 1 bis 5 C-Atomen, in Gegenwart einer nicht zur vollständigen Hydrolyse ausreichenden Menge Wasser, vorzugsweise von 1 bis 100 Mol-% der hierzu benötigten Menge, über einen Zeitraum von 5 Minuten bis zu 48 Stunden bei Raumtemperatur bis 200 °C vorkondensiert. Um diesen Vorkondensationseffekt zu begünstigen, kann dabei, zusätzlich zu dem vorhandenen Aminoorganosilan, noch ein weiterer Kondensationskatalysator, wie z.B. eine anorganische oder organische Säure oder Base oder ein Metall-haltiger Kondensationskatalysator, wie beispielsweise Dibutylzinndiacetat, zugesetzt werden; bevorzugt wird Ammoniak verwendet. Nach erfolgter Vorkondensation wird die vollständige Hydrolyse und Polykondensation wie beschrieben durchgeführt.

Nach einer anderen möglichen Verfahrensvariante werden Block-Copolykondensate erhalten, bei denen eine Bildung von Blöcken gleicher Einheiten nach Formel (I) und (II) und gegebenenfalls einer oder mehrerer Einheiten nach Formel (IV) vorliegt.

Die dabei durchzuführende Vorkondensation kann ebenfalls durch den Zusatz einer geringen Menge eines sauren oder basischen oder auch eines Metall-haltigen Kondensationskatalysators beschleunigt werden; bevorzugt wird Ammoniak verwendet. Die Menge Wasser, die zur Vorkondensation verwendet wird, hängt davon ab, welcher Oligomerisierungsgrad, d.h. welche Blockgröße erreicht werden soll. Bei Einsatz von mehr Wasser zur Vorkondensation entstehen natürlich größere Einheiten als bei Verwendung von weniger Wasser. Die Dauer der Vorkondensation hängt, wie bereits vorstehend beschrieben, generell von den Hydrolysebereitschaft der monomeren Komponenten und der Temperatur ab.

Nach einer weiteren möglichen Verfahrensvariante werden sog. gemischte Copolykondensate erhalten, bei denen teilweise eine Bildung von Blöcken gleicher Einheiten nach Formel (I) und/oder Formel (II) und/oder einer oder mehrerer Einheiten nach Formel (IV) vorliegt, bei denen stets jedoch mindestens eine monomere Komponente nicht vorkondensiert und mindestens eine monomere Komponente vorkondensiert wird. Dieses Verfahren sieht vor, daß man von den vorgesehenen Monomeren der Formeln (V), (VI) und gegebenenfalls (VIII) mindestens ein Monomer oder mehrere Monomere voneinander unabhängig wie vorstehend beschrieben vorkondensiert und anschließend mit dem oder den verbleibenden, nicht vorkondensierten Monomeren vereinigt und dann nach Zusatz weiteren Wassers sowie gegebenenfalls weiteren Lösungsmittels die vollständige Hydrolyse und Polykondensation der Gesamtmischung vollzieht. Die weitere Behandlung des dabei gebildeten Polykondensates gestaltet sich dann wie bei den anderen beschriebenen Verfahren.

Eine besonders wichtige Ausführungsform des Herstellungsverfahrens sieht vor, das noch lösungsmittel- und wasserfeuchte bzw. -nasse kugelförmige Material einer Temperaturbehandlung während 1 Stunde bis zu einer Woche bei Temperaturen von 50 - 300 °C, vorzugsweise 100 - 200 °C zu unterwerfen, wobei bedarfsweise Überdruck angewendet wird.

Diese Behandlung unter "dämpfenden" bzw. digerierenden Bedingungen dient ebenfalls überwiegend einer Verbesserung der mechanischen Festigkeit und der Porosität des geformten Materials und kann auch in der zuletzt vorliegenden, eine flüssige und die feste Produktphase enthaltenden Dispersion des Herstellungsganges oder in Wasser allein durchgeführt werden.

Die vorstehend beschriebene Ausführungsform einer Nachbehandlung der erhaltenen, aber nicht getrockneten geformten Organosiloxan-Copolykondensate besteht also darin, den in Form von Kugeln ausgebildeten Feststoff in Anwesenheit mindestens der Komponente Wasser bzw. der im Herstellungsgang zuletzt vorliegenden flüssigen Phase als Dampf oder Flüssigkeit, einer Temperaturbehandlung während 1 Stunde bis zu einer Woche bei Temperaturen von 50 - 300 °C, vorzugsweise 100 - 200 °C, gegebenenfalls unter Überdruck, zu unterwerfen. Dabei kann die Anwesenheit eines sauren, basischen oder Metall-haltigen Katalysators von Vorteil sein. Eine besonders vorteilhafte Ausführungsform sieht die Verwendung von Ammoniak vor.

Charakterisiert sind die erfindungsgemäß zu verwendenden Organosiloxanamin-Copolykondensate insbesondere anhand der quantitativen Hydrolyseausbeuten, der Elementaranalysen und durch die Bestimmung der einzelnen Funktionalitäten. Zwischen den nach den unterschiedlichen Herstellungsverfahren erhaltenen Copolykondensaten besteht rein optisch kein Unterschied. Je nach Vorbehandlung besitzen die bevorzugten kugelig geformten Copolykondensate einen Teilchendurchmesser von 0,01 bis 3,0, vorzugsweise 0,05 bis 2,0 mm, eine spezifische Oberfläche von 0,0001 bis 1.000, vorzugsweise 0,001 bis 700 $m^2$/g, ein spezifisches Porenvolumen von 0,01 bis 6,0 ml/g und eine Schüttdichte von 50 bis 1.000 g/l, vorzugsweise 100 bis 800 g/l. Die einstellbaren Porendurchmesser liegen im Bereich von 0,1 bis über 1.000 nm.

Die chemische Stabilität der erfindungsgemäß zu verwendenden Produkte ist mit denen der ungeformten Produkte vergleichbar, d.h. in Abhängigkeit von den einzelnen Funktionalitäten liegen sie an der Luft bei deutlich über 150 °C und unter Schutzgasatmosphäre bei über 200 °C.

Entscheidend für die Eignung als Absorber sind vor allem das spezifische Porenvolumen, der Porendurchmesser und die Oberflächeneigenschaften. Diese Faktoren können einerseits über die Herstellungs- und Nachbehandlungsverfahren sowie andererseits auch über die chemische Zusammensetzung, z.B. durch den Einbau hydrophobierend wirkender Vernetzergruppen in das Polysiloxangerüst, beeinflußt werden.

Die erfindungsgemäß zurückzugewinnenden Katalysatoren umfassen sämtliche für die Hydrierung von NBR in organischem Lösungsmittel (wie z.B. Chlorbenzol, Dichlorbenzol, Aceton, Butanon) in homogener Phase geeigneten Rhodium- und Rutheniumverbindungen.

Bevorzugte Rhodiumverbindungen entsprechen den Formeln

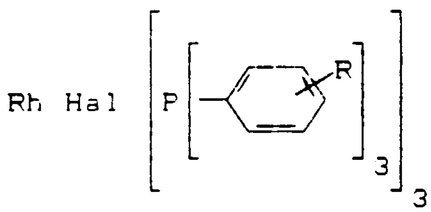

(IX)

oder

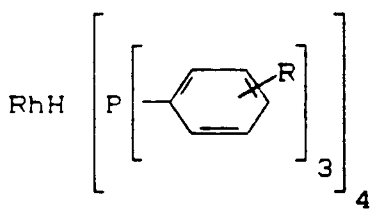

(X)

worin

- Hal ein Halogen aus der Reihe Chlor, Brom, Iod und
- R Wasserstoff, Hydroxy, $C_1$-$C_6$-Alkyl (wie z.B. Methyl, Isopropyl), $C_1$-$C_6$-Alkoxy (wie z.B. Methoxy), $C_1$-$C_6$-Alkoxycarbonyl (wie z.B. Methoxycarbonyl, Ethoxycarbonyl) oder Halogen aus der Reihe Fluor, Chlor, Brom, Iod

bedeuten. Rhodiumverbindungen der Formel (IX) mit Hal = Cl, Br und R = H sowie der Formel (X) mit R = H sind bevorzugt.

Bevorzugte Rutheniumverbindungen entsprechen der Formel

$RuX_{2y}\,[(L^1)_n\,(L^2)_{5-z}]$ (XI)

worin

- X Wasserstoff, Halogen, $SnCl_3$,
- $L^1$ Wasserstoff, Halogen, $(R^6\text{-COO})_n$ und Cyclopentadienyl der Formel

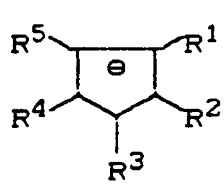

in der $R^1$ bis $R^5$ unabhängig voneinander für Wasserstoff, Methyl, Ethyl oder Phenyl stehen, wobei auch benachbarte Substituenten gemeinsam einen Kohlenwasserstoffrest derart bilden können, daß $L^1$ ein Indenyl- oder Fluorenylsystem ist,

- $L^2$ ein Phosphan, Bisphosphan oder Arsan und
- y Null, 0,5 oder 1,
- n 1 oder 2,

z  eine ganze Zahl von 1 bis 4,

$R^6$  Alkyl, Cycloalkyl, Aryl oder Aralkyl mit 1 bis 20 C-Atomen

bedeuten.

Beispiele für $L^1$-Liganden vom Typ Cyclopentadienyl umfassen Cyclopentadienyl, Pentamethylcyclopentadienyl, Ethyltetramethylcyclopentadienyl, Pentaphenylcyclopentadienyl, Dimethyltriphenylcyclopentadienyl, Indenyl und Fluorenyl. Die Benzoringe in den $L^1$-Liganden vom Indenyl- und Fluorenyl-Typ können durch Alkylreste mit 1 bis 6 C-Atomen, insbesondere Methyl, Ethyl und Isopropyl, Alkoxyreste mit 1 bis 4 C-Atomen, insbesondere Methoxy und Ethoxy, Arylreste, insbesondere Phenyl, und Halogene, insbesondere Fluor und Chlor, substituiert sein. Bevorzugte $L^1$-Liganden vom Typ Cyclopentadienyl sind die jeweils unsubsituierten Reste Cyclopentadienyl, Indenyl und Fluorenyl.

Im Liganden $L^1$ vom Typ $(R^6 \cdot COO)_n$ umfaßt $R^6$ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, aromatische Kohlenwasserstoffreste aus der Benzolreihe mit 6 bis 18, bevorzugt 6 bis 10 C-Atomen, Aryl-substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Reste $R^6$ können gegebenenfalls durch Hydroxy, $C_1$-$C_6$-Alkoxy, $C_1$-$C_6$-Carbalkoxy, Fluor, Chlor oder Di-$C_1$-$C_4$-alkylamino substituiert sein, die Cycloalkyl-, Aryl- und Aralkylreste darüber hinaus durch $C_1$-$C_6$-Alkyl. Alkyl-, Cycloalkyl- und Aralkylgruppen können Ketogruppen enthalten.

Beispiele für den Rest $R^6$ sind Methyl, Ethyl, Propyl, iso-Propyl, tert.-Butyl, Cyclohexyl, Phenyl, Benzyl und Trifluormethyl. Bevorzugte Reste $R^6$ sind Methyl, Ethyl und tert.-Butyl.

Bevorzugte $L^2$-Liganden sind Phosphane und Arsane der Formeln

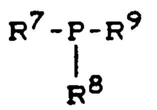

(XII)

und

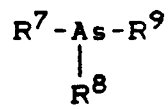

(XIII) ,

in denen $R^7$, $R^8$ und $R^9$ unabhängig voneinander der Bedeutung von $R^6$ entsprechen.

Bevorzugte $L^2$-Liganden der Formeln (XII) und (XIII) sind Triphenylphosphan, Diethylphenylphosphan, Tritolylphosphan, Trinaphthylphosphan, Diphenylmethylphosphan, Diphenylbutylphosphan, Tris-(p-carbmethoxyphenyl)-phosphan, Tris-(p-cyanophenyl)-phosphan, Tributylphosphan, Tris-(trimethoxyphenyl)-phosphane, Bis-(trimethylphenyl)-phenylphosphane, Bis-(trimethoxyphenyl)-phenylphosphane, Trimethylphenyl-diphenylphosphane, Trimethoxyphenyldiphenylphosphane, Tris-(dimethylphenyl)-phenylphosphane, Tris-(dimethoxyphenyl)-phosphane, Bis-(dimethylphenyl)-phenylphosphane, Bis-(dimethoxyphenyl)-phenylphosphane, Dimethylphenyldiphenylphosphane, Dimethoxyphenyldiphenylphosphane, Triphenylarsan, Ditolylphenylarsan, Tris-(4-ethoxyphenyl)-arsan, Diphenylcyclohexylarsan, Dibutylphenylarsan und Diethylphenylarsan. Besonders bevorzugt sind Triarylphosphane, insbesondere Triphenylphosphan.

Weitere Beispiele für $L^2$-Liganden sind Bisphosphane der Formel

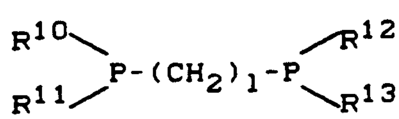

(XIV)

in der 1 für eine ganze Zahl von 1 bis 10 steht und die Reste $R^{10}$, $R^{11}$, $R^{12}$, $R^{13}$ unabhängig voneinander die Bedeutung von $R^6$ haben.

Beispiele für Bisphosphane sind 1,2-Bis-diphenylphosphanoethan, 1,2-Bis-dianisylphosphanoethan, 1,3-Bis-diphenylphosphanopropan und 1,4-Bis-diphenylphosphanobutan. Bevorzugt ist 1,2-Bis-diphenylphosphanoethan, insbesondere 1,3-Bis-diphenylphosphanopropan und 1,4-Bis-diphenylphosphanobutan.

Die Definition der Verbindungen (XI) soll auch solche Verbindungen umfassen, deren $L^1$ und $L^2$ durch eine oder mehrere kovalente Bindungen untereinander verbunden sind. Beispiele für derartige Verbindungen sind Verbindungen der Formel

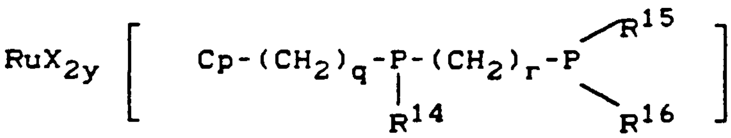 (XV)

Cp: Cyclopentadienyl

worin q und r unabhängig voneinander eine ganze Zahl von 1 bis 6 bedeuten und die Reste $R^{14}$ bis $R^{16}$ unabhängig voneinander die Bedeutung von $R^6$ haben.

Beispiele für Liganden in eckiger Klammer der Formel (XV) sind 1,4-Diphospha-6-cyclopentadienyl-1,1,4-triphenylhexan, bevorzugt 1,5-Diphospha-7-cyclopentadienyl-1,1,5-triphenylheptan und insbesondere 1,6-Diphospha-8-cyclopentadienyl-1,1,6-triphenyloctan.

Die Rh-Verbindungen (IX) und (X) sind bekannt. Die Ru-Verbindungen (XI) und (XV) sind größtenteils bekannt und können z.B. nach P.S. Hallmann, B. R. McGarvey und G. Wilkinson in J. Chem. Soc. (A), 1968, S. 3143 - 3150, M. I. Bruce, N. J. Windsor in Aust. J. Chem. 30, (1977), S. 1601 - 1604, T. Kauffmann und J. Olbrich in Tetrahedron Letters 25, (1984), S. 1967 - 1970, T. Wilczewsky, M. Bochenska und J. F. Biernat in J Organomet. Chem. 215, (1981), S. 87 - 96, R. W. Mitchell, A. Spencer und G. Wilkinson in J. Chem. Soc. Dalton 1973, S. 852, D. Rose, J. D. Gilbert, R. P. Richardson und G. Wilkinson in J. Chem. Soc. (A) 1969, S. 2914 - 2915, A. Dobson, S. D. Robinson und M. F. Uttley in J. Chem. Soc. Dalton 1975, S. 376, L. A. Oro, M. A. Ciriano, M. Campo, C. Foces-Foces und F. H. Cano in J. Organomet. Chem. 289 (1985) 117 - 131, DE-OS 33 37 294, R. O. Harris, N. K. Hota, L. Sadavoy und M. J. C. Yuen in J. Organomet. Chem. 54 - (1973) 259 - 264, T. Blackmore, M. I. Bruce und F. G. A. Stoue in J. Chem. Soc., Section A 1971, S. 2376-2382, oder in analoger Weise hergestellt werden.

Besonders bevorzugte Ruthenium-Komplexkatalysatoren der Formel (XI) sind:

$RuCl_2\ (PPh_3)_3$
$RuHCl\ (PPh_3)_3$
$RuH_2\ (PPh_3)_4$
$RuH_4\ (PPh_3)_3$
$RuH\ (CH_3COO)\ (PPh_3)_3$
$RuH\ (C_2H_5COO)\ (PPh_3)_3$
$RuH\ [(CH_3)_3C \bullet COO]\ (PPh_3)_3$
$Ru\ (CH_3\ COO)_2\ (PPh_3)_2$
$RuCl\ (Cp)\ (PPh_3)_2$
$RuH\ (Cp)\ (PPh_3)_2$
$Ru\ (SnCl_3)\ (Cp)\ (PPh_3)_2$
$RuCl\ (\eta^5\text{-}C_9H_7)\ (PPh_3)_2$
$RuH\ (\eta^5\text{-}C_9H_7)\ (PPh_3)_2$
$Ru\ (SnCl_3)\ (\eta^5\text{-}C_9H_7)\ (PPh_3)_2$
$RuCl\ (\eta^5\text{-}C_{13}H_9)\ (PPh_3)_2$
$RuH\ (\eta^5\text{-}C_{13}H_9)\ (PPh_3)_2$
$Ru\ (SnCl_3)\ (\eta^5\text{-}C_{13}H_9)\ (PPh_3)_2$
$RuCl\ (\eta^5\text{-}C_9H_7)\ (dppe)$

Dabei bedeuten "Ph" Phenyl, "Cp" Cyclopentadienyl und "dppe" 1,2-Bis-diphenylphosphanoethan.

Als "löslich" im Sinne der Erfindung werden Katalysatoren dann bezeichnet, wenn sich bei 20 °C von 3,4 g Katalysator in 2 l des betreffenden Lösungsmittels mehr als 50 Gew.-%, bevorzugt mehr als 65 Gew.-%, insbesondere mehr als 80 Gew.-% lösen.

Bevorzugte organische Lösungsmittel umfassen bei der Hydrierung mit löslichen Rh-Verbindungen chlorierte aromatische Kohlenwasserstoffe, wie z.B. Chlorbenzol und Dichlorbenzole.

Bevorzugte organische Lösungsmittel umfassen bei der Hydrierung mit löslichen Ru-Verbindungen $C_3$-$C_6$-Ketone und insbesondere Mischungen aus

a) $C_3$-$C_6$-Keton und

b) einwertigem sekundärem oder tertiärem $C_3$-$C_6$-Alkohol,

wobei der Gewichtsanteil des Alkohols b) am Lösungsmittelgemisch 2 bis 60, vorzugsweise 5 bis 50, insbesondere 7 bis 40 Gew.-% beträgt.

Bevorzugte $C_3$-$C_6$-Ketone sind beispielsweise Aceton, Butanon, Pentanone, Cyclopentanon und Cyclohexanon und deren Mischungen. Vorzugsweise wird nur ein einziges Keton als Lösungsmittel bzw. als Lösungsmittelkomponente eingesetzt. Butanon und insbesondere Aceton sind bevorzugt.

Bevorzugte $C_3$-$C_6$-Alkohole sind beispielsweise 2-Propanol, 2-Butanol, 2-Methyl-2-propanol, 2- und 3-Pentanol, 3-Methyl-2-butanol, 2-Methyl-2-butanol, 2-, 3- und 4-Hexanol, 4-Methyl-2-pentanol. Bevorzugter Alkohol ist 2-Methyl-2-propanol, insbesondere 2-Butanol, ganz besonders bevorzugt ist 2-Propanol.

Die Konzentration an Katalysator (berechnet als Rhodium oder Ruthenium und bezogen auf HNBR) beträgt im allgemeinen 2 bis 1.000, vorzugsweise 5 bis 300 ppm, insbesondere 8 bis 200 ppm. Die Konzentration an HNBR, bezogen auf die Gesamtlösung, beträgt im allgemeinen 0,1 bis 90, vorzugsweise 2 bis 40 Gew.-%.

Den erfindungsgemäß zu verwendenden Absorber setzt man in der Regel in Mengen von 0,01 bis 80, vorzugsweise 0,1 bis 70, insbesondere 1 bis 60, Gew.-%, bezogen auf HNBR, ein. Vorzugsweise werden die Absorber vor ihrem Einsatz im gleichen Lösungsmittel, in dem HNBR gelöst ist, bis zur Gewichtskonstanz gequollen.

Die Absorption des gebrauchten Katalysators auf dem Absorber im Sinne der Erfindung kann in der einfachsten Ausführungsform so erfolgen: Entweder wird der Absorber in der HNBR-Lösung suspendiert (Rührkesselverfahren) und nach entsprechender Verweilzeit aus dieser Lösung wieder abgetrennt oder man läßt die HNBR-Lösung über eine Absorber enthaltende Schicht, vorzugsweise über eine mit Absorber gepackte Säule, laufen (Säulenverfahren). Weitere Ausführungsformen sind möglich, wie z.B. Anwendung einer Rührkesselkaskade im Gegenstrom oder im Split. Für die Hydrierkatalysator-Rückgewinnung ist es vorteilhaft, bei einer Temperatur von 10 bis 150 °C, vorzugsweise von 30 bis 120 °C, zu arbeiten. Erhöhte Temperaturen haben sich als vorteilhaft erwiesen.

Die Verweilzeiten können in weiten Grenzen variieren und hängen insbesondere von der Temperatur und vom tolerierten Katalysator-Restgehalt in der HNBR-Lösung ab. Mit 0,5 bis 15, vorzugsweise 1 bis 10 Stunden, werden in der Regel gute Ergebnisse erhalten.

Vorzugsweise wählt man die Verweilzeit bei gegebener Absorbermenge und gegebener Temperatur so hoch, daß eine weitere Erhöhung der Verweilzeit soeben keinen Einfluß mehr auf die zurückgewonnene Katalysatormenge hat.

Die Rückgewinnung des Edelmetalls vom Absorber kann grundsätzlich auf zwei verschiedenen Wegen erfolgen:

1. Man kann den Absorber und evtl. anhaftenden HNBR verbrennen und das im Verbrennungsrückstand enthaltene Edelmetalloxid wieder zum Katalysator aufarbeiten.
2. Man kann den Absorber HNBR-frei spülen und dann durch ein geeignetes Lösungsmittel den Katalysator extrahieren, das Lösungsmittel abziehen und den Katalysator wieder verwenden, sofern er noch die gewünschte Aktivität aufweist (Andernfalls wird er aufgearbeitet).

## Beispiele

### A. Herstellung der Absorber

Absorber 1

76,9 g (0,18 Mol) $(C_6H_5)P[(CH_2)_3Si(OCH_3)_3]_2$, 223,1 g (0,35 Mol) $N[(CH_2)_3Si(OC_2H_5)_3]_3$ und 73,8 g (0,35 Mol) $Si(OC_2H_5)_4$ wurden in 350 ml Ethanol vereinigt. Die Mischung wurde in einem 3 l-Reaktionsgefäß mit KPG-Rührer mit Halbmondrührblatt, Rückflußkühler und Innenthermometer auf 75 °C aufgeheizt. Die klare Lösung wurde mit 130 ml 90 °C heißem, entsalzten Wasser versetzt, dann 15 min. unter Rückfluß gerührt und dann auf 70 °C abgekühlt. Unter langsamem Rühren (250 U/min.) wurde die klare viskose Lösung bei dieser Temperatur gehalten, bis die Gelierung einsetzte. Ca. 1 min. nach dem Einsetzen der Gelierung wurden 600 ml Toluol und nach vollzogener Homogenisierung 700 ml 50 °C warmes entsalztes Wasser zugesetzt. Es wurde anschließend 2 h mit 700 U/min. bei Rückflußtemperatur gerührt, dann abgekühlt und dann die gesamte Reaktionsmischung in einen Stahlautoklaven überführt und 24 h bei 150 °C unter Eigendruck langsam gerührt.

Anschließend wurde abgekühlt und der geformte Feststoff von der flüssigen Phase abfiltriert. Nach 6-stündiger Trocknung bei 90 °C und 12-stündiger Trocknung bei 130 °C unter $N_2$-Atmosphäre wurden 178 g (99,6 % der Theorie) symmetrisches kugelförmiges Produkt, bestehend aus Polymereinheiten der Formel

$$N[(CH_2)_3SiO_{3/2}]_3 \cdot 0{,}5(C_6H_5)P[(CH_2)_3\ SiO_{3/2}]_2 \cdot SiO_{4/2}$$

erhalten, wovon 97 % eine Korngröße von 0,2 bis 1,5 mm hatten.

| | |
|---|---|
| Spezifische Oberfläche: | 456 $m^2/g$ |
| Spezifisches Gesamtporenvolumen: | 2,6 ml/g |
| Schüttdichte: | 423 g/l |

Für die nachfolgende Verwendung zur Rh-Rückgewinnung wurde das Produkt so gesiebt, daß 87 % eine Korngröße von 0,3 bis 1,4 mm aufwiesen.

Zur Bevorratung wurde das Produkt mit Wasser befeuchtet.

Absorber 2

912,1 g (2,06 Mol) $S[(CH_2)_3Si(OC_2H_5)_3]_2$ wurden mit 500 ml Ethanol versetzt und in einer 10 l-Quickfitapparatur mit Rührer, Rückflußrührer und Innenthermometer auf Rückflußtemperatur aufgeheizt. Nach dem Erreichen von Rückflußtemperatur wurden der Lösung 50 ml entsalztes Wasser zugesetzt. Es wurde zunächst 1 Stunde unter Rückfluß gerührt. Dann wurden 260,0 g (0,41 Mol) $N[(CH_2)_3Si(OC_2H_5)_3]_3$, 429,2 g (2,06 Mol) $Si(OC_2H_5)_4$ und 1.200 ml Ethanol sowie weitere 450 ml Wasser zugesetzt. Es wurde weiter 25 min. unter Rückfluß gerührt, dann auf 76 °C abgekühlt und langsam weitergerührt, bis die Gelierung einsetzte. Nach dem Beginn der Gelierung wurden 2.500 ml Hexanol-1 und nach weiteren 10 min. 3,0 l entsalztes Wasser, in dem 7,5 g Polyvinylalkohol gelöst worden waren, zugesetzt. Es wurde noch 1 Stunde unter Rückfluß gerührt, dann die Reaktionsmischung abgekühlt und dann der geformte Feststoff abfiltriert. Dieser wurde mit 3,0 l 2 gew.-%iger $NH_3$-Lösung versetzt, dann in einen Stahlautoklaven überführt und 48 h bei 130 °C gerührt. Dann wurde abgekühlt, der Feststoff abfiltriert, mit insgesamt 5,0 l Ethanol gewaschen und dann 6 h bei 80 °C und 18 h bei 130 °C unter $N_2$-Schutzgasatmosphäre getrocknet. Es wurden insgesamt 692 g (99 % der Theorie) eines gemischten Copolykondensates, bestehend aus Einheiten der Formel

$$N[(CH_2)_3SiO_{3/2}]_3 \cdot 5S[(CH_2)_3\ SiO_{3/2}]_2 \cdot 5SiO_{4/2}$$

erhalten. Das kugelförmige Produkt lag zu über 96 % in einer Korngröße von 0,3 bis 1,8 mm vor.

| | |
|---|---|
| Spezifische Oberfläche: | 636 $m^2/g$ |
| Spezifisches Gesamtporenvolumen: | 3,2 ml/g |
| Schüttdichte: | 366 g/l |

Für die nachfolgende Verwendung zur Rh-Rückgewinnung wurde das Produkt so gesiebt, daß 86 % eine Korngröße von 0,3 bis 1,4 mm aufwiesen.

Zur Bevorratung wurde das Produkt mit Wasser befeuchtet.

Absorber 3

78,8 g (0,125 Mol) $N[(CH_2)_3Si(OC_2H_5)_3]_3$ wurden mit 5 ml entsalztem Wasser versetzt und 1 h bei 80 °C gerührt.

Parallel dazu wurden 121,2 g (0,25 Mol) des Thioharnstoffderivates

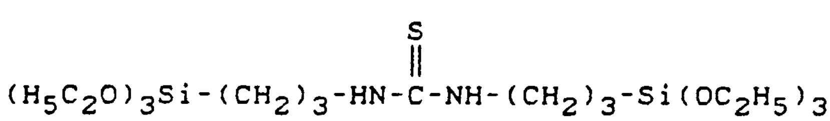

ebenfalls nach Zusatz von 5 ml Wasser über einen Zeitraum von 1 h bei 80 °C vorkondensiert.

Beide Vorkondensate wurden nach dieser Zeit in 200 ml Ethanol vereinigt und nach Zusatz von weiteren 50 ml Wasser 10 min. unter Rückfluß gerührt, dann auf 70 °C abgekühlt und weiter gerührt (200 U/min.) bis die Gelierung einsetzte. 30 sec. nach dem Einsetzen der Gelierung wurden 300 ml Octanol-1 und 5 min. später 300 ml entsalztes Wasser zugesetzt. Die Reaktionsmischung wurde noch 2 h bei 600

U/min. gerührt, dann abgekühlt, der kugelförmige Feststoff von der flüssigen Phase abfiltriert, analog Beispiel 2 im Autoklaven gealtert und dann extrahiert. Nach 8-stündiger Trocknung bei 90 °C und 16-stündiger Trocknung bei 140 °C unter Schutzgasatmosphäre wurden 102 g eines Block-Copolykondensates, bestehend aus Einheiten der Formel

$N[(CH_2)_3SiO_{3/2}]_3 \cdot 2S=C[NH-(CH_2)_3SiO_{3/2}]_2$

erhalten. 94 % des geformten Produktes besaßen eine Korngröße von 0,2 bis 1,6 mm.

| | |
|---|---|
| Spezifische Oberfläche: | 456 $m^2$/g |
| Spezifisches Gesamtporenvolumen: | 2,2 ml/g |
| Schüttdichte: | 446 g/l |

Für die nachfolgende Verwendung zur Rh-Rückgewinnung wurde das Produkt so gesiebt, daß 84 % eine Konrgröße von 0,3 bis 1,4 mm aufwiesen.

Zur Bevorratung wurde das Produkt mit Wasser befeuchtet.

B. Verwendung der Absorber

Als HNBR wurde ®Therban 1707 (Produkt der Bayer AG) mit einem Hydriergrad von über 99 %, einem Acrylnitrilgehalt von 34 Gew.-% und einer Mooney-Viskosität von 75 (ML 1+4) 100 °C in Form einer Lösung in Chlorbenzol eingesetzt.

Beispiel 1

Neben Absorbern der Korngröße 0,3 bis 1,4 mm wurden auch solche der Korngröße < 0,1 mm verwendet. Die letzteren Produkte wurden analog der beschriebenen Herstellweise gewonnen, indem mehr Lösungsmittel verwendet und intensiver dispergiert wurde. Die so erhaltenen Produkte wurden einer entsprechenden Siebung unterworfen.

Im 500 ml-3-Hals-Glas-Rührkolben wurden die wasserfeuchten Absorber in unterschiedlichen Mengen, jeweils berechnet als Trockensubstanz, vorgelegt und dreimal mit je 50 ml Methanol gewaschen. Das überstehende Lösungsmittel wurde jeweils abgenommen. Man versetzte die Absorber mit jeweils 5 gew.-%igen HNBR-Lösungen und rührte die erhaltenen Suspensionen zwischen 80 °C und 120 °C 2 h lang. Man filtrierte die Absorber heiß über ein Filtertuch ab. Aliquote Teile der Filtrate wurden im Vakuumtrockenschrank zur Isolierung des HNBR eingedampft und dieser quantitativ auf Rhodium mittels Atomabsorptionsspektroskope (AAS) untersucht. Die Ergebnisse sind in Tabelle 1 aufgeführt. Der Rh-Gehalt der HNBR-Ausgangslösung betrugt 58 ppm, bezogen auf Kautschuk.

Tabelle 1: Katalysator-Rückgewinnung aus HNBR-Lösung mittels suspendiertem Absorber

Zurückgewonnenes Rhodium [% der Theorie]

Gewichtsteile Absorber pro 100 Gew.-Teile HNBR /Temperatur

| Absorber Typ | Menge | 50 80° C | 25 80° C | 12,5 80° C | 6,25 80° C | 6,25 100° C | 6,25 120° C | 3 80° C | 3 100° C | 3 120° C |
|---|---|---|---|---|---|---|---|---|---|---|
| A | 2 | 76 | 81 | 52 | 43 | 45 | 36 | 14 | 14 | 41 |
| | 3 | >98 | 98 | 97 | 97 | 98 | 98 | 90 | 95 | 93 |
| | 1 | >98 | >98 | 91 | 91 | 95 | 97 | 69 | 76 | 90 |
| B | 2 | 34 | 24 | 12 | | | | | | |
| | 3 | 91 | 91 | 84 | | | | | | |
| | 1 | 78 | 62 | 55 | | | | | | |

A: Absorber-Teilchendurchmesser < 0,1 mm

B: Absorber-Teilchendurchmesser 0,3-1,4 mm

## Beispiel 2

Wasserfeuchte Absorber mit Teilchendurchmessern von 0,3 bis 1,4 mm (gemessen an Trockensubstanz) wurden zur Entfernung von Wasser in einer Glassäule mit 3 Bettvolumen Methanol und anschließend

mit 3 Bettvolumen Chlorbenzol gewaschen und dann in der Glassäule nacheinander 5-mal mit je 200 g einer 2,5 gew.-%igen HNBR-Lösung in Chlorbenzol beschickt. Die Ergebnisse der Rh-Rückgewinnung sind in Tabelle 2 zusammengefaßt. Der Rh-Gehalt der HNBR-Ausgangslösung betrug 58 ppm, bezogen auf Kautschuk.

Tabelle 2: Katalysator-Rückgewinnung aus HNBR-Lösung mittels Säulen

| | Absorber 2 (Menge 31 g)** | | Absorber 3 (Menge 34 g)** | | Absorber 1 (Menge 35 g)** | |
|---|---|---|---|---|---|---|
| | Zeit* h | Rückgewonnenes Rh [%] | Zeit* h | Rückgewonnenes Rh [%] | Zeit* h | Rückgewonnenes Rh [%] |
| Versuch | | | | | | |
| 1 | 1.3 | 33 | | | | |
| 2 | 1.0 | 28 | | | | |
| 3 | 1.0 | 26 | | | | |
| 4 | 1.2 | 31 | | | | |
| 5 | 1.3 | 22 | | | | |
| Versuch | | | | | | |
| 1 | | | 2.0 | 40 | | |
| 2 | | | 2.3 | 40 | | |
| 3 | | | 3.0 | 48 | | |
| 4 | | | 3.0 | 40 | | |
| 5 | | | 2.6 | 43 | | |
| Versuch | | | | | | |
| 1 | | | | | 2.3 | 31 |
| 2 | | | | | 3.0 | 45 |
| 3 | | | | | 3.0 | 33 |
| 4 | | | | | 2.5 | 28 |
| 5 | | | | | 3.0 | 43 |

* Durchlaufzeit für 200 g HNBR-Lösung
** Bezogen auf Trockensubstanz

Säulendurchmesser: 22 mm
Säulenlänge: 300 mm
Füllvolumen: 113 ml

Beispiel 3

Wasserfeuchte Absorber mit einem Teilchendurchmesser von 0,3 bis 1,4 mm (gemessen an Trockensubstanz) wurden zur Entfernung von Wasser in einer Glassäule mit 3 Bettvolumen Methanol gewaschen und anschließend im Vakuumtrockenschrank bei 40°C über Nacht getrocknet. Eine Menge von 0.5 g

trockenem Absorber wurde in 12,7 g Chlorbenzol über Nacht in einem Scheidetrichter gequollen und dann unter Stickstoff zu 152,3 g einer mit Stickstoff durchspülten 100 °C heißen HNBR-Lösung (6,5%ig), befindlich in einem 500 ml 3-Hals-Glasrührkolben, gegeben. Man rührte 8 h, filtrierte den Absorber heiß über ein Filtertuch ab und dampfte zur Gewinnung des Kautschuks das Lösungsmittel im Vakuumtrockenschrank ab und analysierte diesen auf Rhodium. Der Rh-Gehalt der eingesetzten HNBR-Lösung betrug 60 ppm, bezogen auf Kautschuk.

Beim Absorber 1 wurde die Rh-Rückgewinnungsrate zu 77%, beim Absorber 2 zu 38% und beim Absorber 3 zu 97% bestimmt.

## Patentansprüche

**1.** Verwendung von Absorbern zur Rückgewinnung von Verbindungen des Rhodiums und/oder Rutheniums, die für die homogene Katalyse der NBR-Hydrierung mit Wasserstoff in organischer Lösung gebraucht worden sind, aus der HNBR-Lösung, wobei als Absorber kugelförmige Organosiloxan-Copolykondensate mit einem Durchmesser von 0,01 bis 3 mm, bestehend aus Einheiten der Formel (I)

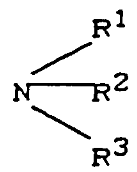

(I)

und aus Einheiten der Formel

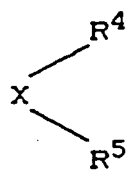

(II)

eingesetzt werden, wobei

$R^1$ bis $R^5$ gleich oder verschieden sind und eine Gruppe der Formel (III)

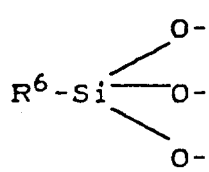

(III)

bedeuten,

$R^6$ direkt an das Stickstoffatom bzw. den zweibindigen Rest X gebunden ist und eine lineare oder verzweigte Alkylengruppe mit 1 bis 10 C-Atomen, eine Cycloalkylengruppe mit 5 bis 8 C-Atomen oder eine Einheit der Formel

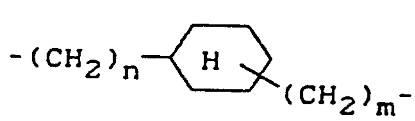

oder

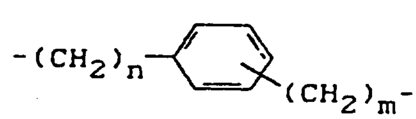

darstellt, in der

n eine Zahl von 1 bis 6 ist und die Zahl stickstoffständiger bzw. X-ständiger Methylengruppen angibt und

m eine Zahl von 0 bis 6 ist, die freien Valenzen der an das Siliciumatom gebundenen Sauerstoffatome wie bei Kieselsäuregerüsten durch Siliciumatome weiterer Gruppen der Formel (III) und/oder über die Metallatome in einem oder mehreren der vernetzenden Brückenglieder

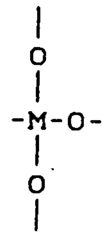 oder 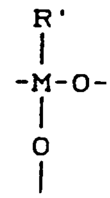 oder 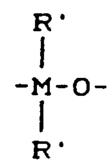 (IV)

bzw.

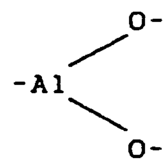 oder 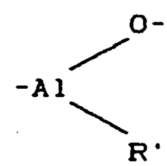

abgesättigt sind,

M ein Silicium-, Titan- oder Zirkoniumatom und

R' eine lineare oder verzweigte Alkylgruppe mit 1 bis 5 C-Atomen oder eine Phenylgruppe ist und das Verhältnis der Siliciumatome aus den Gruppen der Formel (III) zu den Metallatomen in den Brückengliedern (IV) 1 : 0 bis 1 : 20 beträgt und in Formel (II)

X für $>$N-H, $>$N-$CH_3$, $>$N-$C_2H_5$, -S-, -$S_2$-, -$S_3$-, -$S_4$-,

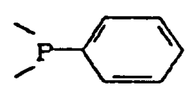 , 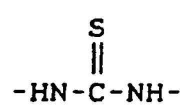 ,

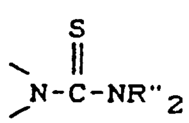 , 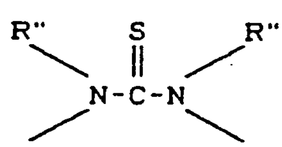 , 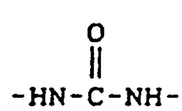

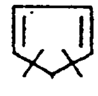 , 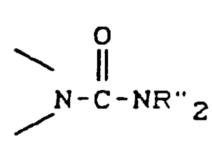

steht, wobei

R'' gleich H oder eine lineare oder verzweigte Alkylgruppe mit 1 bis 5 C-Atomen oder eine

Gruppe $(CH_2)_n$-$NR'''_2$ ist,
n eine Zahl von 1 bis 6 bedeutet und
R''' gleich H oder eine lineare oder verzweigte Alkylgruppe mit 1 bis 5 C-Atomen ist,

**2.** Verwendung nach Anspruch 1, wonach als Absorber Organosiloxan-Copolykondensate in Kugelform mit einem Durchmesser von 0,05 bis 2 mm eingesetzt werden.

## Claims

**1.** The use of absorbers for recovering compounds of rhodium and/or ruthenium, which have been used for homogeneous catalysis of the hydrogenation of NBR with hydrogen in organic solution, from the HNBR solution, the absorbers used being spherical organosiloxane copolycondensates 0.01 to 3 mm in diameter consisting of units corresponding to formula (I):

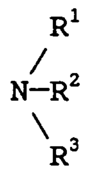

(I)

and of units corresponding to formula (II):

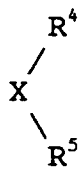

(II)

in which
$R^1$ to $R^5$ may be the same or different and represent a group corresponding to formula (III):

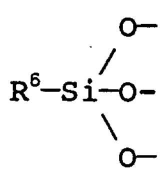

(III)

$R^6$ is directly attached to the nitrogen atom or to the two-bond group X and is a linear or branched $C_{1-10}$ alkylene group, a $C_{5-8}$ cycloalkylene group or a unit corresponding to the following formula:

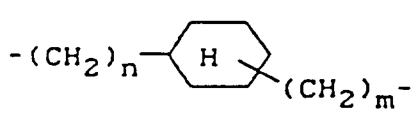

or

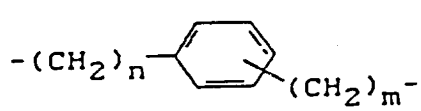

in which
n is a number of 1 to 6 and indicates the number of methylene groups in the nitrogen position or the X position and
m is a number of 0 to 6,
the free valencies of the oxygen atoms attached to the silicon atom being saturated, as in silica structures, by silicon atoms of other groups corresponding to formula (III) and/or via the

metal atoms in one or more of the crosslinking bridge members

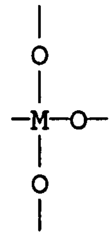 or 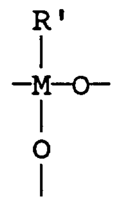 or 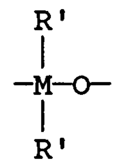 (IV)

or

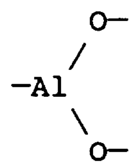 or 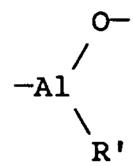

M is a silicon, titanium or zirconium atom and

R' is a linear or branched alkyl group containing 1 to 5 carbon atoms or a phenyl group and the ratio of the silicon atoms from the groups of formula (III) to the metal atoms in the bridge members (IV) is 1:0 to 1:20 and, in formula (II),

X represents $>$N-H, $>$N-$CH_3$, $>$N-$C_2H_5$, -S-, -$S_2$-, -$S_3$-,

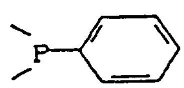, 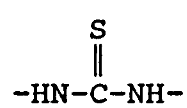

-$S_4$-,

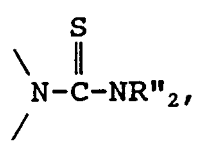, 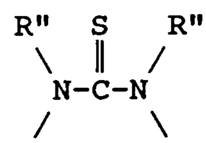, 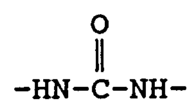

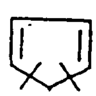, 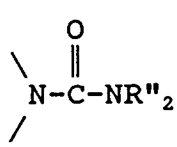

where

R'' is H or a linear or branched $C_{1-5}$ alkyl group or a group $(CH_2)_n$-NR'''$_2$,

n is a number of 1 to 6 and

R''' is H or a linear or branched $C_{1-5}$ alkyl group.

**2.** The use claimed in claim 1, in which organosiloxane copolycondensates in the form of spherical particles 0.05 to 2 mm in diameter are used as absorbers.

## Revendications

1. Utilisation d'agents absorbants pour la récupération de dérivés du rhodium et/ou du ruthénium qui ont été utilisés pour la catalyse homogène de l'hydrogénation du caoutchouc NBR en solution organique à partir de la solution de ce caoutchouc, dans lequel on utilise en tant qu'agents absorbants des copolycondensats d'organosiloxanes sous forme de sphérules à un diamètre de 0,01 à 3 mm, et qui consistent en motifs de formule (I) :

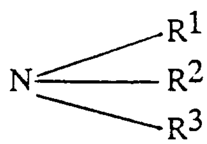 (I)

et en motifs de formule :

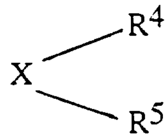 (II)

dans lesquelles
$R^1$ à $R^5$, ayant des significations identiques ou différentes, représentent chacun un groupe de formule (III) :

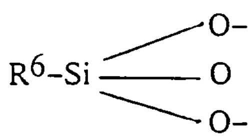 (III)

$R^6$, relié directement à l'atome d'azote ou au radical divalent X, représente un groupe alkylène linéaire ou ramifié en $C_1$-$C_{10}$, un groupe cycloalkylène en $C_5$-$C_8$ ou un motif de formule :

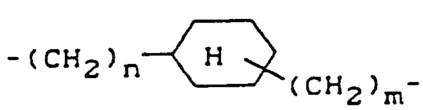 ou 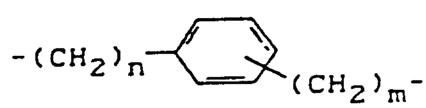

dans lesquelles
n est un nombre allant de 1 à 6 et correspond au nombre des groupes méthylènes sur l'azote ou sur X et
m est un nombre allant de 0 à 6,
les valences libres des atomes d'oxygène reliés à l'atome de silicium, comme dans les squelettes de silice, sont saturées par des atomes de silicium d'autres groupes de formule (III) et/ou par les atomes métalliques d'un ou plusieurs des ponts réticulants

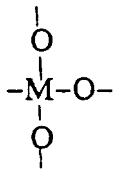 ou 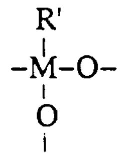 ou 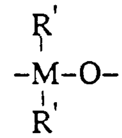 (IV)

et respectivement

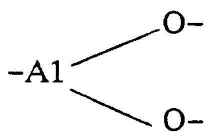 ou 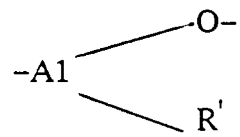

M représente un atome de silicium, de titane ou de zirconium et
R' représente un groupe alkyle linéaire ou ramifié en $C_1$-$C_5$ ou un groupe phényle, le rapport entre les atomes de silicium des groupes de formule III et les atomes métalliques des ponts (IV) va de 1:0 à 1:20,
et dans la formule (II)
X représente >N-H, >N-$CH_3$, >N-$C_2H_5$, -S-, -$S_2$-, -$S_3$-, -$S_4$-,

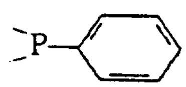 , 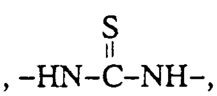 , 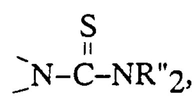 ,

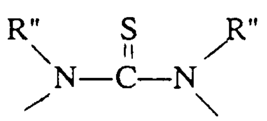 , 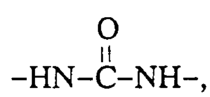 , 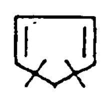 , 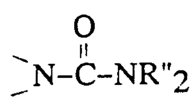

R'' représente H ou un groupe alkyle linéaire ou ramifié en $C_1$-$C_5$ ou un groupe $(CH_2)_n$-$NR'''_2$
n est un nombre allant de 1 à 6 et
R''' représente H ou un groupe alkyle linéaire ou ramifié en $C_1$-$C_5$.

**2.** Utilisation selon la revendication 1, dans laquelle on utilise en tant qu'agents absorbants des copolycondensats d'organosiloxanes à l'état de sphérules à un diamètre de 0,02 à 2 mm.